# EUROPEAN PATENT APPLICATION

(11) **EP 4 749 151 A2**
(43) Date of publication of application: **27.05.2026**
(21) Application number: 25213069.5
(22) Date of filing: 03.11.2025
(51) Int. Cl.: F16C 19/52, F16C 33/58, F16C 35/067, F16C 35/077, F16C 23/08

(54) **MECHANISM FOR PREVENTING BEARING CREEP**

(30) Priority: 25.11.2024 US 202418959214
(71) Applicant: Tesla, Inc., Austin, TX 78725 (US)
(72) Inventor: BROWN, Philip, Austin, Texas, 78725 (US); CHEN, Pilun, Austin, Texas, 78725 (US); FELDER, Ian, Austin, Texas, 78725 (US); BENNETT, Scott, Austin, Texas, 78725 (US); BORIS, Ryan, Austin, Texas, 78725 (US); WANG, Weiyi, Austin, Texas, 78725 (US)
(74) Representative: Liesegang, Eva

(57) **Abstract**

A bearing assembly for power transmission includes a bearing outer ring, a bearing housing, and a retaining plunger. The bearing outer ring comprises a first surface and a second surface, the bearing outer ring structurally forming at least a first recess on the first surface. The bearing housing houses the bearing outer ring and forms a cavity. The retaining plunger with a spring is partially enclosed by the cavity. When the first recess and the retaining plunger misalign, the retaining plunger is compressed into the cavity by the first surface of the bearing outer ring.

## Description

### TECHNICAL FIELD

The present disclosure relates to bearing design. More specifically, some embodiments of the present disclosure relate to a bearing assembly for preventing bearing creep during operation.

### BACKGROUND

Bearing assemblies facilitate smooth rotational or linear movement by reducing friction between moving parts. For example, bearing assemblies find applications in various industries, including automotive, aerospace, and industrial machinery, where they support or facilitate movements of shafts, axles, and other moving and rotating components.

One significant challenge for bearing assemblies is the prevention of bearing creep. For example, creep can occur when a bearing outer ring slides relative to an bearing bore, especially under high-load conditions. Bearing creep can result in excessive wear, leading to gear misalignment and potential gear fracture.

Existing methods to mitigate bearing creep often involve precise alignment and/or specialized tooling during installation. These methods can complicate the manufacturing process and increase mass production cycle time. Other approaches, such as increasing the bearing's outer diameter (OD) or applying coatings, have been explored to prevent creep. However, these solutions may only reduce rather than effectively eliminate bearing creep.

### SUMMARY

In some aspects, the techniques described herein relate to a bearing assembly for power transmission, the bearing assembly including: a bearing outer ring including a first surface and a second surface, the bearing outer ring structurally forming at least a first recess on the first surface; a bearing housing configured to house the bearing outer ring, the bearing housing structurally forming at least a cavity; a retaining plunger including a spring, the retaining plunger at least partially enclosed by the cavity, wherein, when the first recess and the retaining plunger are misaligned with each other, the retaining plunger is compressed by the first surface of the bearing outer ring into the cavity.

In some aspects, the techniques described herein relate to a bearing assembly, wherein, when the first recess and the retaining plunger are aligned with each other, the retaining plunger engages the first recess to prevent the bearing outer ring to rotate.

In some aspects, the techniques described herein relate to a bearing assembly, wherein the spring causes the retaining plunger to engage the first recess when the first recess and the retaining plunger are aligned with each other.

In some aspects, the techniques described herein relate to a bearing assembly, wherein the bearing outer ring structurally forms a second recess on the second surface, and wherein the second surface and the first surface face toward opposite directions.

In some aspects, the techniques described herein relate to a bearing assembly, further including a bearing inner ring and a plurality of rolling elements, wherein the plurality of rolling elements are sandwiched between the bearing outer ring and the bearing inner ring.

In some aspects, the techniques described herein relate to a bearing assembly, wherein the plurality of rolling elements include balls, spheres, cylindrical rollers, tapered rollers, barrel roller, or needle rollers.

In some aspects, the techniques described herein relate to a bearing assembly, wherein the bearing housing is a portion of a top gear box or a bottom gear box.

In some aspects, the techniques described herein relate to a bearing assembly, wherein the first recess includes a notch, a slot, a through slot, or a hole.

In some aspects, the techniques described herein relate to a bearing assembly, wherein the retaining plunger includes a spring-loaded dowel pin, a detent pin, or a plunger pin.

In some aspects, the techniques described herein relate to a drive unit for a vehicle, the drive unit including: a motor configured to drive a gearbox; and the gearbox including: a bearing including a bearing outer ring, the bearing outer ring structurally forming a first recess on a first surface, a bearing housing configured to house the bearing, the bearing housing structurally forming at least a cavity, and a retaining plunger at least partially enclosed by the cavity, wherein the retaining plunger is compressed by the first surface of the bearing outer ring into the cavity when the first recess and the retaining plunger are misaligned with each other.

In some aspects, the techniques described herein relate to a drive unit, wherein, when the first recess and the retaining plunger are aligned with each other, the retaining plunger engages the first recess to prevent the bearing outer ring to rotate.

In some aspects, the techniques described herein relate to a drive unit, wherein the retaining plunger includes a spring, and wherein the spring causes the retaining plunger to engage the first recess when the first recess and the retaining plunger are aligned with each other.

In some aspects, the techniques described herein relate to a drive unit, wherein the bearing outer ring structurally forms a second recess on a second surface, and wherein the second surface and the first surface face toward opposite directions.

In some aspects, the techniques described herein relate to a drive unit, wherein the bearing includes a bearing inner ring and a plurality of rolling elements, and wherein the plurality of rolling elements are sandwiched between the bearing outer ring and the bearing inner ring.

In some aspects, the techniques described herein relate to a drive unit, wherein the first recess includes a notch, a slot, a through slot, or a hole.

In some aspects, the techniques described herein relate to a process of assembling a bearing assembly for power transmission, the process including: disposing a first retaining plunger into a first cavity, the first cavity structurally formed by a first bearing housing of a first case; disposing a first bearing into the first bearing housing, the first bearing including a first bearing outer ring structurally forming a first recess that is configured to engage the first retaining plunger when aligned with the first retaining plunger; disposing a second retaining plunger into a second cavity, the second cavity structurally formed by a second bearing housing of a second case; and disposing a second bearing into the second bearing housing, the second bearing including a second bearing outer ring structurally forming a second recess that is configured to engage the second retaining plunger when aligned with the second retaining plunger.

In some aspects, the techniques described herein relate to a process, wherein the first case is a top gear case of a gearbox and the second case is a bottom gear case of the gearbox.

In some aspects, the techniques described herein relate to a process, wherein the first bearing and the second bearing are disposed along a gear shaft that is at least partially enclosed within the top gear case and the bottom gear case.

In some aspects, the techniques described herein relate to a process, wherein the first retaining plunger includes a spring, and wherein the first retaining plunger is compressed fully into the first cavity by the first bearing when the first recess and the first retaining plunger are misaligned with each other.

In some aspects, the techniques described herein relate to a process, wherein when the first retaining plunger engages the first recess, the first bearing outer ring is prevented from rotating.

### BRIEF DESCRIPTION OF THE DRAWINGS

Embodiments of the present disclosure are described with reference to the accompanying drawings, in which like reference characters reference like elements, and wherein:
FIG. 1A illustrates a perspective view of an example gearbox in which embodiments of the present disclosure can be implemented by a bearing assembly to prevent bearing creep according to some embodiments.
FIG. 1B illustrates a top view of parts of the example gearbox of FIG. 1A and with certain parts removed to reveal some internal structures of the example gearbox of FIG. 1A in accordance with some embodiments of the present disclosure.
FIG. 2A illustrates a perspective view of a bearing including at least a recess on a surface of a bearing outer ring in accordance with some embodiments of the present disclosure.
FIG. 2B illustrates another perspective view of the bearing of FIG. 2A in accordance with some embodiments of the present disclosure.
FIG. 2C illustrates a perspective view of an upper bearing and a lower bearing disposed along a gear shaft in accordance with some embodiments of the present disclosure.
FIG. 3A illustrates a perspective view of an example bearing housing of a gear case into which a bearing, such as the bearing of FIG. 2A, can be disposed in accordance with some embodiments of the present disclosure.
FIG. 3B illustrates a side cross-sectional view of the example bearing housing of FIG. 3A in accordance with some embodiments of the present disclosure.
FIG. 3C illustrates a side cross-sectional view representative of an example bearing assembly that includes a recess on a bearing outer ring engaged with a retaining plunger in accordance with some embodiments of the present disclosure.
FIG. 4 illustrates a side view representative of a retaining plunger, such as the retaining plunger of FIG. 3C, in accordance with some embodiments of the present disclosure.
FIGS. 5A and 5B contrast wear levels associated with components of drive units with and without mechanisms to prevent bearing creep in accordance with some embodiments of the present disclosure.
FIG. 6 illustrates an example bearing assembly process in accordance with embodiments of the present disclosure.
FIG. 7 illustrates an example assembly process in accordance with embodiments of the present disclosure.

### DETAILED DESCRIPTION

Generally described, one or more aspects of the present disclosure correspond to systems and methods that implement mechanisms to prevent bearing creep associated with bearing systems (e.g., bearing assemblies of vehicle drive units). More specifically, some embodiments of the present disclosure disclose a bearing assembly that uses a retaining plunger (e.g., a spring-loaded dowel pin, detent pin, plunger pin, or the like) to engage a recess (e.g., a notch, a slot, a hole, or the like) in a bearing outer ring for preventing bearing creep. During the manufacturing or assembly process, the recess does not need to be aligned with the retaining plunger. When the recess of the bearing outer ring is not aligned with the retaining plunger during assembly into the bearing housing, the retaining plunger compresses into a spring-loaded cavity in the bearing housing. After assembly into the bearing housing and during operation, if the bearing outer ring begins to creep, the bearing outer ring will slowly rotate relative to the bearing housing until the recess aligns with the retaining plunger, allowing the retaining plunger to be pushed (e.g., by a spring) into the recess and engage the recess to thereby prevent further rotation of the bearing outer ring relative to the bearing housing.

Advantageously, the engagement between the recess and the retaining plunger (e.g., via a spring force) can effectively prevent or eliminate bearing creep. Therefore, misalignment and wear of associated components can be prevented, thereby enhancing the reliability of associated systems (e.g., drive units of vehicles) particularly under high-load operating conditions (e.g., high torque, high speed). Additionally, the design associated with the bearing assembly obviates the need for precisely aligning mating or engaging features (e.g., the retaining plunger and the recess) during manufacturing and assembling, which allows for faster, easier, or random alignment between the retaining plunger and the recess in the outer bearing ring to advantageously streamline and shorten cycle time of production processes.

Bearing assemblies are widely in use today to facilitate smooth rotational or linear movement. For example, bearing assemblies find applications in various industries, including automotive, aerospace, and industrial machinery, where they support or facilitate movements of shafts, axles, and other moving or rotating components. Generally speaking, bearing assemblies need to maintain alignment, reduce friction, and/or minimize wear of associated components to prevent mechanical failures.

One significant challenge in bearing systems is the prevention of bearing creep. Creep occurs when the bearing outer ring slides relative to the bearing bore, especially under high-load conditions. Bearing creep can result in wear of support material around the bearing outer ring, misalignment of a bearing, and potential failure of a system (e.g., a drive unit of a vehicle).

Conventional methods to mitigate bearing creep often involve precise alignment and/or specialized tooling during the assembly process. For example, particular caution and precise alignment is typically needed for design using fixed pins when pressing gear and/or bearing assemblies into drive unit cases. These methods can complicate the manufacturing process and result in long cycle time for mass production. Other approaches, such as increasing the bearing's outer diameter (OD) or applying coatings, have been explored to prevent creeping. However, these solutions may only reduce rather than effectively eliminate bearing creep.

To address at least a portion of the above problems, a bearing assembly that engages or aligns a retaining plunger and a recess that is in a bearing outer ring after assembly is disclosed in accordance with some embodiments of the present disclosure. During operation of the bearing assembly after assembly (e.g., when the bearing assembly facilitates rotation of an axle shaft or a gear shaft associated with a drive unit of a vehicle), if the bearing outer ring begins to creep, the bearing outer ring will rotate until (typically within one rotation cycle) the recess aligns with the retaining plunger. This alignment allows the biased retaining plunger to be pushed (e.g., by a spring) into the recess and engage the recess. When the retaining plunger is engaged with the recess and locks the bearing outer ring relative to the bearing housing, the bearing outer ring stops rotating, which effectively prevents bearing creep from continuing to occur within a short amount of time (e.g., no greater than the amount of time for the bearing outer housing to complete a full rotation within the bearing housing).

During a manufacturing or assembly process, the recess does not need to be aligned with the retaining plunger (although the recess may be aligned with the retaining plunger in some cases). When the recess of the bearing outer ring is not aligned with the retaining plunger during the assembly process, the retaining plunger is compressed by the bearing outer ring into a spring-loaded cavity in a support housing. As noted above, if the retaining plunger is later aligned with the recess in the bearing outer ring due to bearing creep, the retaining plunger will then be pushed into the recess by a spring force to advantageously eliminate further bearing creep.

In some embodiments, a retaining plunger can be a spring-loaded dowel pin, detent pin, plunger pin, or any other type of pins. A recess in a bearing outer ring can be a notch, a slot (e.g., a through slot), a hole, or any other shapes or structures to which the retaining plunger can engage or mate when the retaining plunger and the recess are aligned with each other. A bearing assembly as used herein can include any type of a bearing that utilizes rolling elements (e.g., balls, spheres, cylindrical rollers, tapered rollers, barrel roller, needle rollers, or the like, or any other types of rolling elements) to facilitate movements of components (e.g., axle shafts or gear shafts) associated with a drive unit of a vehicle.

In some embodiments, a process for assembling or installing a bearing assembly can include at least some of the following steps. First, a lower bearing can be disposed or attached to a bottom case (e.g., a bottom gear case). The lower bearing can include at least a bearing outer ring, a bearing inner ring, and a plurality of rolling elements. More specifically, the bearing outer ring of the lower bearing can be disposed or fit into a bearing housing of the bottom case. The bearing outer ring can include a recess on a surface of the bearing outer ring, where the surface can face downward toward the bearing housing of the bottom case. The bearing housing can structurally form a cavity. A retaining plunger that includes a spring can be at least partially enclosed by the cavity.

As noted above, the recess on the surface of the bearing outer ring does not need to be aligned with the retaining plunger during assembly. Because precise alignment between the recess and the retaining plunger is not necessary, the process can be faster and easier. When the recess does not align with the retaining plunger, the retaining plunger (e.g., the spring) is compressed into the cavity of the bearing housing.

After disposing or attaching the lower bearing to the bottom case, an upper bearing can be similarly disposed or attached to a top case (e.g., a top gear case). In some embodiments, the upper bearing and the lower bearing can be disposed along a shaft (e.g., a gear shaft). The upper bearing can include at least a bearing outer ring, a bearing inner ring, and a plurality of rolling elements. More specifically, the bearing outer ring of the upper bearing can be disposed or fit into a bearing housing of the top case. The bearing outer ring can include a recess on a surface of the bearing outer ring, where the surface can face upward toward the bearing housing of the top case. The bearing housing can structurally form a cavity. A retaining plunger that includes a spring can be at least partially enclosed by the cavity.

Similar to disposing or attaching the lower bearing to the bottom case, the recess on the surface facing upward toward the bearing housing of the top case does not need to be aligned with the retaining plunger that is at least partially enclosed by the cavity of the bearing housing of the top case. As noted above, because precise alignment between the recess and the retaining plunger is not necessary, the process can be faster and easier. When the recess does not align with the retaining plunger, the retaining plunger (e.g., the spring) is compressed into the cavity of the bearing housing of the top case.

Thus, the process allows for the upper bearing and the lower bearing to be installed without precise alignment with the bearing housings on the bottom and top cases, respectively. As noted above, if the bearing outer ring of the lower bearing and/or the bearing outer ring of the upper bearing begins to creep during operation, the bearing outer ring may slowly rotate until the recess aligns with the retaining plunger, allowing the retaining plunger to be pushed (e.g., by a spring) into and engage the recess to thereby prevent further rotation of the bearing outer ring relative to the bearing housing.

In some embodiments, a process for assembling or installing a bearing assembly can optionally include clocking, circumferential alignment, and/or radial distance adjustment associated with the bearing assembly. For example, clocking (e.g., rotational positioning of the bearing outer ring relative to the bearing housing) can be applied for ensuring that the recess(es) on the bearing outer ring align with the retaining plunger(s). As another example, circumferential alignment (e.g., angular positioning of components associated with a bearing assembly around the circumference of the bearing outer ring) can be applied to allow a retaining plunger to effectively engage a recess during operation to prevent bearing creep. As another example, radial distance (e.g., spacing between the center of the bearing and the bearing outer ring) may be designed to enable a retaining plunger to be compressed into a cavity when the retaining plunger misaligned with a recess, and to engage the recess when the retaining plunger aligned with the recess. Advantageously, integrating steps such as clocking, circumferential alignment, and/or radial distance adjustment may help achieve proper functioning of the bearing assembly, allowing for smooth rotational movement while preventing unwanted rotation of the bearing outer ring within a bearing housing.

In other embodiments, a bearing outer ring can have one or more recesses for mating or engaging a retaining plunger to prevent bearing creep. For example, a first recess can be disposed on a first side of a bearing outer ring, and a second recess can be disposed on a second side of the bearing outer ring. The second side of the bearing outer ring can be opposite to the first side of the bearing outer ring. The first side of the bearing outer ring can interface with a first case (e.g., a bottom gear case). The second side of the bearing outer ring can interface with a second case (e.g., a top gear case). In some embodiments, a first retaining plunger can be disposed in the first case during assembly without the need to align the first retaining plunger with the first recess. The second retaining plunger can be disposed in the second case during assembly without the need to align the second retaining plunger with the second recess.

Although the various aspects will be described in accordance with illustrative embodiments and combination of features, one skilled in the relevant art will appreciate that the examples and combination of features are illustrative in nature and should not be construed as limiting. More specifically, aspects of the present application may be applicable with various types of bearings, bearing assemblies, power or torque transmission systems under different contexts, such as when employed for automotives, vessels, or any kinds of vehicles. Still further, although specific architectures of bearings or bearing assemblies for preventing bearing creep and/or streamlining assembly process will be described, such illustrative bearings or bearing assemblies should not be construed as limiting. Accordingly, one skilled in the relevant art will appreciate that the aspects of the present application are not necessarily limited to any particular types of bearing, bearing assemblies interfaces, gearboxes, drive units, or illustrative interactions.

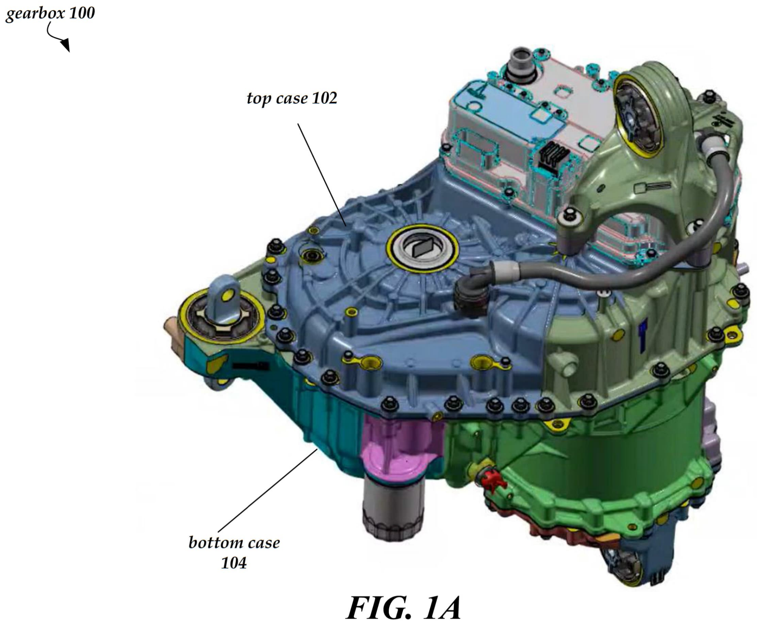

FIG. 1A illustrates a perspective view of an example gearbox 100 in which embodiments of the present disclosure can be implemented by a bearing assembly to prevent bearing creep according to some embodiments. As shown in FIG. 1A, the example gearbox 100 includes at least a top case 102 and a bottom case 104 that can house components (not shown in FIG. 1A) of the gearbox 100.

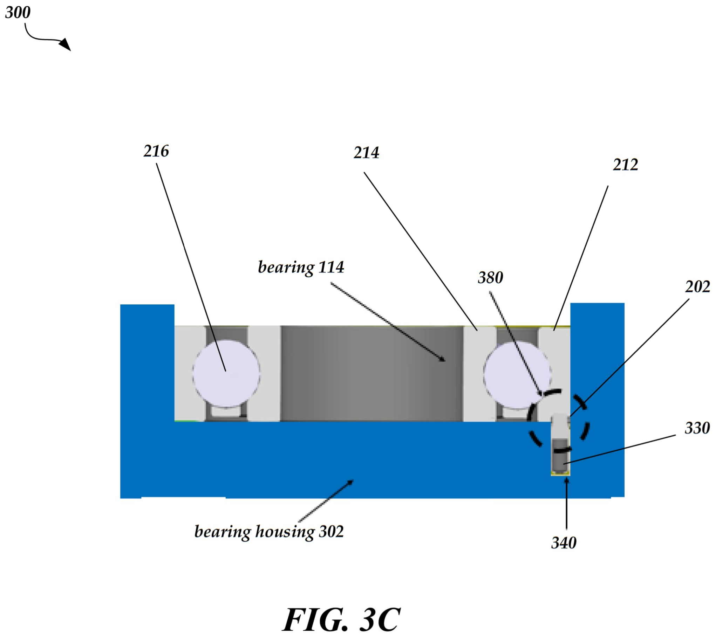

In some embodiments, the gearbox 100 can be a part of a drive unit of a vehicle. For example, the gearbox 100 can be driven by a motor (not shown in FIG. 1A) of the vehicle to facilitate power transmission for the vehicle. The gearbox 100 can house or accommodate one or more bearing assemblies (e.g., a bearing assembly 300 of FIG. 3C) that can stop bearing creep during operation.

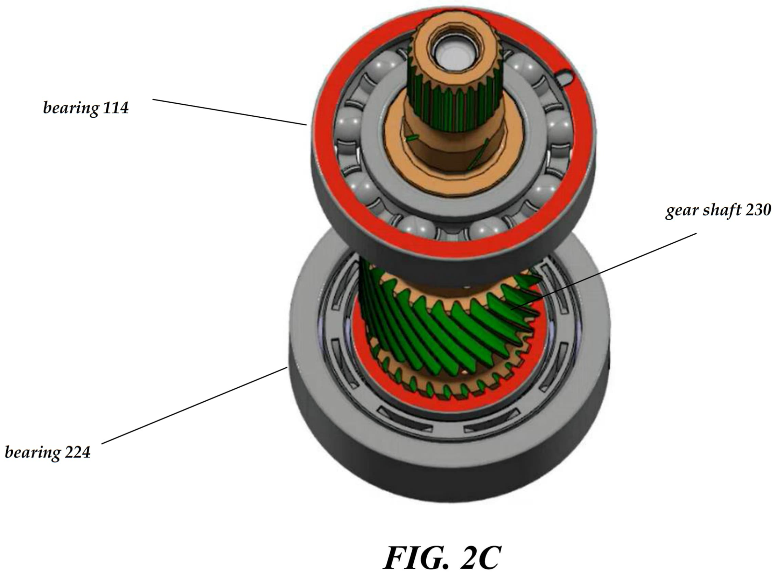

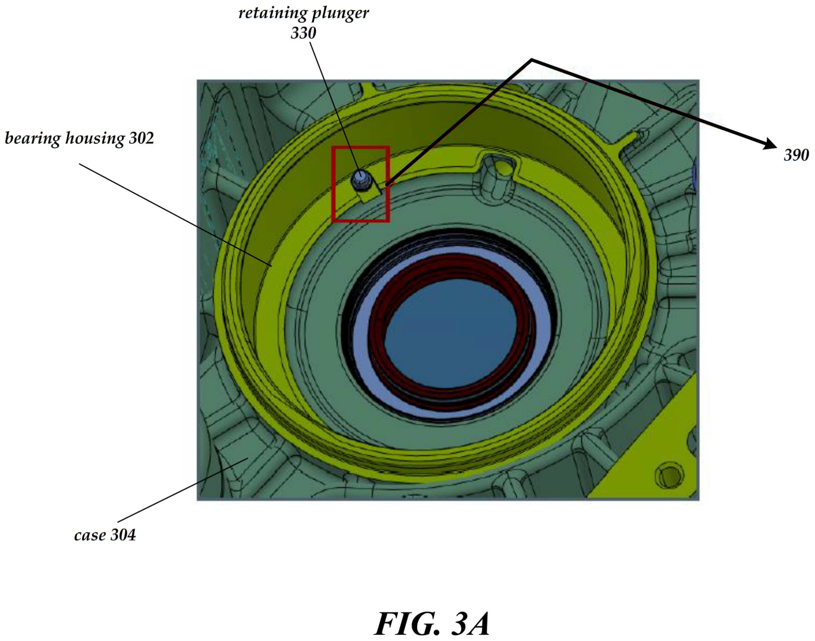

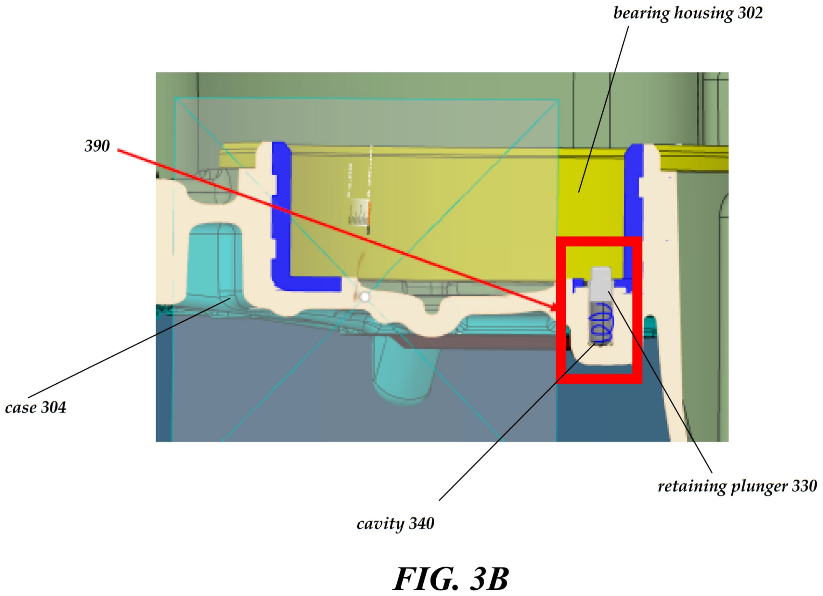

In some embodiments, the top case 102 forms an upper section of the gearbox 100. The top case 102 may structurally form a bearing housing (e.g., a bearing housing 302 of FIG. 3A) for housing an upper bearing (e.g., a bearing 114 shown in FIG. 2C), ensuring proper alignment and support. The bearing housing can structurally form a cavity (e.g., a cavity 340 of FIG. 3B) that at least partially encloses a retaining plunger. The top case 102 can interface with the bottom case 104 to form a complete enclosure for the gearbox 100.

In some embodiments, the bottom case 104 forms the lower section of the gearbox 100. The bottom case 104 may structurally form a bearing housing for housing a lower bearing, providing necessary support and alignment. Similar to the top case 102, the bearing housing can form a cavity that at least partially encloses another retaining plunger.

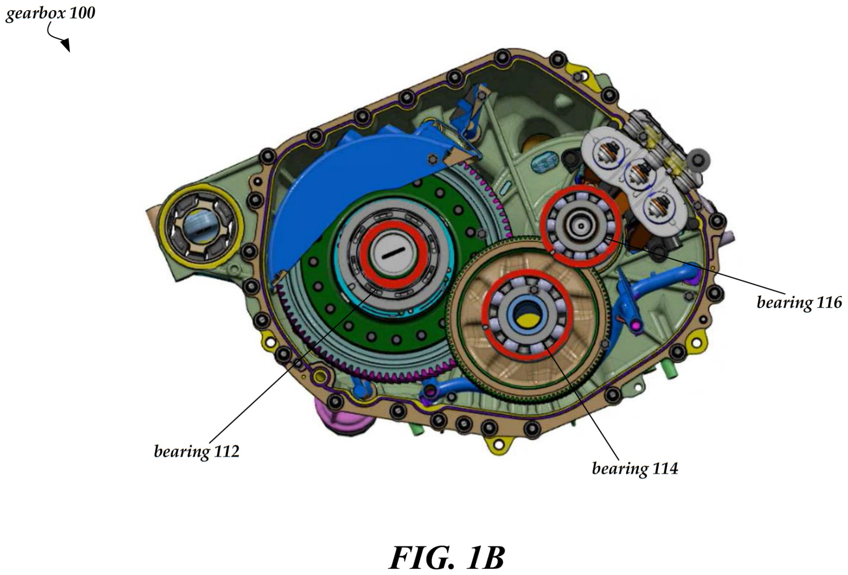

FIG. 1B illustrates a top view of parts of the example gearbox 100 of FIG. 1A and with certain parts removed to reveal some internal structures of the example gearbox 100 in accordance with some embodiments of the present disclosure. More specifically, the top case 102 is removed to expose certain parts of the gearbox 100. As shown in FIG. 1B, the gearbox 100 includes at least a bearing 112, a bearing 114, and a bearing 116. Each of the bearings 112, 114, and 116 may include a bearing outer ring, a bearing inner ring, and a plurality of rolling elements. The bearing outer ring, the bearing inner ring, and the plurality of rolling elements can function together to facilitate smooth rotational movement while reducing friction.

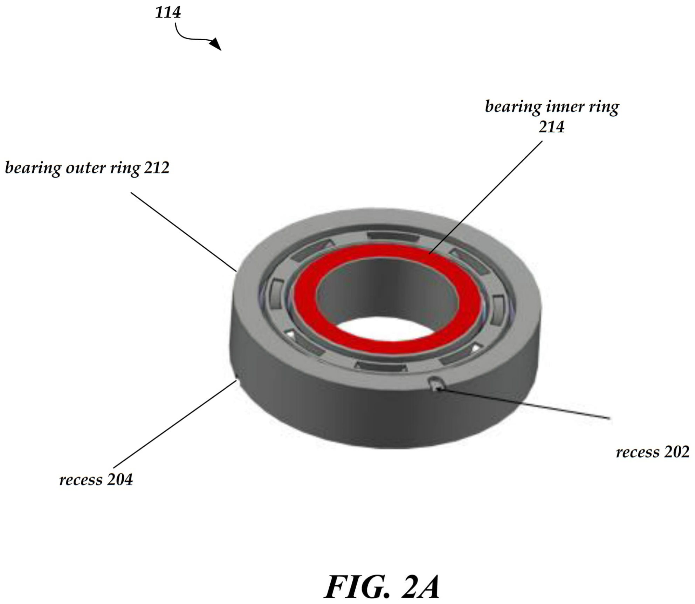

FIG. 2A illustrates a perspective view of the bearing 114 including at least a recess (e.g., the recess 202 or the recess 204) on a surface of a bearing outer ring 212 in accordance with some embodiments of the present disclosure. As shown in FIG. 2A, the bearing 114 includes the bearing outer ring 212 and a bearing inner ring 214. A recess 202 is on a first surface of the bearing outer ring 212, and a recess 204 is on a second surface of the bearing outer ring 212. As will be described below, the recess 202 and/or the recess 204 can be used to engage with a retaining plunger (e.g., a retaining plunger that is disposed in a cavity structurally formed by a bearing housing of a top case 102 or a bottom case 104) for stopping bearing creep, without the need to align with the retaining plunger during assembly or manufacturing processes.

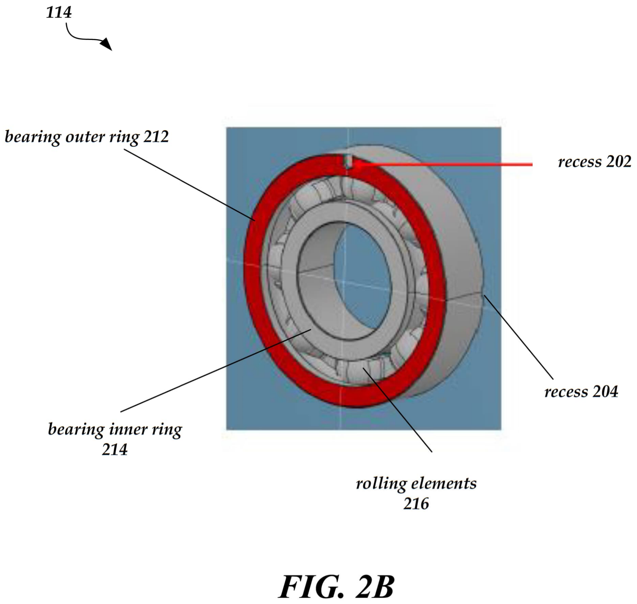

FIG. 2B illustrates another perspective view of the bearing 114 of FIG. 2A in accordance with some embodiments of the present disclosure. As shown in FIG. 2A, the bearing 114 includes the bearing outer ring 212, the bearing inner ring 214, and rolling elements 216. The recess 202 is on the first surface of the bearing outer ring 212, and the recess 204 is on the second surface of the bearing outer ring 212. The rolling elements 216 are sandwiched between the bearing outer ring 212 and the bearing inner ring 214

FIG. 2C illustrates a perspective view of an upper bearing (e.g., the bearing 114) and a lower bearing (e.g., a bearing 224) disposed along a gear shaft 230 in accordance with some embodiments of the present disclosure. The bearing 114, the bearing 224, and the gear shaft 230 can be housed inside the top case 102 and the bottom case 104 to be integrated as parts of the gearbox 100. As shown in FIG. 2C, the bearing 114 and the bearing 224 are disposed along the gear shaft 230. The gear shaft 230 can serve as an axis for the bearings 114 and 224, and can be housed within the top case 102 and the bottom case 104 of the gearbox 100 to transmit rotational forces. The gear shaft 230 can be supported by the bearings 114 and 224, which can maintain alignment and reduce friction.

FIG. 3A illustrates a perspective view of an example bearing housing 302 of a case 304 into which a bearing, such as the bearing 114 of FIG. 2A, can be disposed in accordance with some embodiments of the present disclosure. In some embodiments, the case 304 can be the top case 102 or the bottom case 104 of FIG. 1A. As shown in FIG. 3A, the case 304 can structurally form the bearing housing 302. The bearing housing can structurally form a cavity that can enclose at least a portion of the retaining plunger 330. A region 390 shown in FIG. 3A for illustrative purposes represents the area within the bearing housing 302 where interactions between a bearing outer ring and the retaining plunger 330 occurs.

More specifically, the bearing housing 302 can accommodate the bearing 114, the bearing 112, or the bearing 116, providing support and alignment for these bearings. The bearing housing 302 structurally forms a cavity (e.g., a cavity 340 that will be described with reference to FIG. 3B) that at least partially encloses the retaining plunger 330. This configuration allows the bearing outer ring 212 to interact with the retaining plunger 330, facilitating the prevention of continued bearing creep during operation. The bearing housing 302 ensures that the bearing 114 remains properly positioned within the gear case, contributing to the overall stability and functionality of the gearbox 100.

The case 304 can contribute to the structural integrity of a gearbox (e.g., the gearbox 100), ensuring that the components housed within, including the bearing 114 and the retaining plunger 330, remain in desired positions during operation. The case 304 can also aid in maintaining the alignment of the gear shaft 230 and other internal components.

The retaining plunger 330 is designed to engage with the recess 202 or the recess 204 on the bearing outer ring 212. The retaining plunger 330 includes a biasing mechanism (e.g., spring) that allows the retaining plunger 330 to be compressed into the cavity 340 formed by the bearing housing 302 when the retaining plunger 330 does not align with the recess 202. However, when the recess 202 aligns with the retaining plunger 330 after a slight amount of creep, the spring force causes the retaining plunger 330 to engage the recess 202, thereby preventing further rotation of the bearing outer ring 212 relative to the bearing housing 302. This engagement effectively mitigates bearing creep, ensuring the stability and longevity of a bearing assembly within the gearbox 100.

FIG. 3B illustrates a side cross-sectional view of the example bearing housing 302 of FIG. 3A in accordance with some embodiments of the present disclosure. As shown in FIG. 3B, the case 304 structurally forms the bearing housing 302. The bearing housing 302 structurally forms the cavity 340 that at least partially encloses the retaining plunger 330. Although not shown in FIG. 3B, during a manufacturing or assembly process for a bearing assembly (e.g., a bearing assembly 300 of FIG. 3C), the recess 202 of the bearing outer ring 212 does not need to be aligned with the retaining plunger 330 (although the recess 202 may be aligned with the retaining plunger 330 in some cases). When the recess 202 of the bearing outer ring 212 is not aligned with the retaining plunger 330 during the assembly process, the retaining plunger 330 is compressed by the bearing outer ring 212 into the cavity 340 structurally formed by the bearing housing 302. In this situation, the retaining plunger 330 may be compressed fully into the cavity 340 by the bearing 114.

If the retaining plunger 330 is later aligned with the recess 202 in the bearing outer ring 212 during operation (e.g., during operation of the gearbox 100) due to bearing creep, the retaining plunger 330 will then be pushed into the recess 202 by a spring force to advantageously eliminate any further bearing creep.

FIG. 3C illustrates a side cross-sectional view representative of an example bearing assembly 300 that includes a recess 202 on a surface of a bearing outer ring 212 engaged with the retaining plunger 330 in accordance with some embodiments of the present disclosure. As shown in FIG. 3C, the bearing assembly 300 includes the bearing housing 302, the retaining plunger 330, and the bearing 114. The bearing housing 302 structurally forms the cavity 340 that at least partially encloses the retaining plunger 330. The bearing 114 includes the bearing outer ring 212, the bearing inner ring 214, and the rolling elements 216. The bearing outer ring 212 includes the recess 202 on a surface (e.g., a bottom surface) of the bearing outer ring 212.

During operation of the bearing assembly 300 (e.g., when the bearing assembly 300 facilitates movements of the gearbox 100, or rotation of an axle shaft or a gear shaft associated with a drive unit of a vehicle), if the bearing outer ring 212 begins to creep, the bearing outer ring 212 may rotate until (typically within one rotation cycle) the recess 202 aligns with the retaining plunger 330. Once the 202 aligns with the retaining plunger 330 due to bearing creep, this alignment allows the retaining plunger 330 to be pushed (e.g., by a spring) into the recess 202 to engage the recess 202. When the retaining plunger 330 is engaged with the recess 202 (as shown in a region 380 included in FIG. 3C for illustrative purposes), the bearing outer ring 212 stops further rotation, which can effectively prevent bearing creep from continuing to occur within a short amount of time.

In some embodiments, the recess 202 can be a notch, a slot (e.g., a through slot), a hole, or any other shape or structure which can engage with the retaining plunger 330 when the retaining plunger 330 and the recess 202 are aligned with each other.

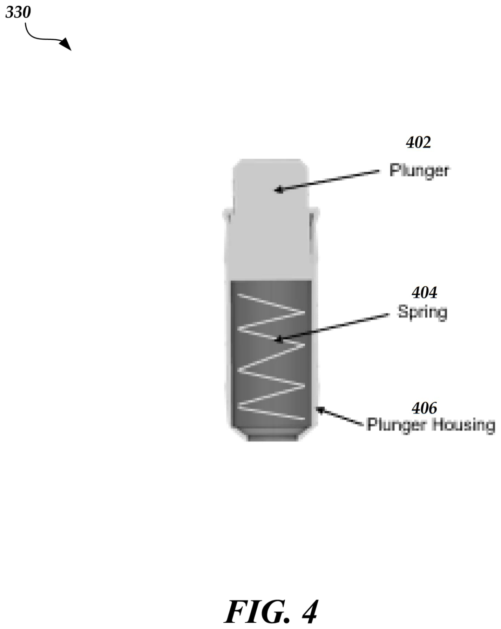

FIG. 4 illustrates a side view representative of the retaining plunger 330 in accordance with some embodiments of the present disclosure. As shown in FIG. 4, the retaining plunger 330 includes a plunger 402, a spring 404, and a plunger housing 406.

In some embodiments, the plunger 402 is designed to engage with a recess on a bearing outer ring (e.g., the recess 202 on the bearing outer ring 212). Once engaged, the plunger 402 can prevent a bearing (e.g., the bearing 114) from rotating, thus preventing further bearing creep. The plunger 402 can be at least partially housed within the plunger housing 406, and can be actuated by the spring 404.

The spring 404 can exert a spring force which pushes the plunger 402 into the recess 202 on the bearing outer ring 212 when the retaining plunger 330 engages the recess 202. This spring-loaded mechanism allows the plunger 402 to engage effectively with the recess 202, thereby preventing further bearing creep. When the retaining plunger 330 and the recess 202 are misaligned with each other, the plunger 402 is pushed into the cavity 340 by the bearing outer ring 212 of the bearing 114 compressing the spring 404.

The plunger housing 406 encloses at least partially the plunger 402 and the spring 404, providing structural support and alignment. The plunger housing 406 can maintain the plunger 402 and the spring 404 in desired positions, and allow the plunger 402 to engage with a bearing outer ring (e.g., the bearing outer ring 212) to prevent further bearing creep.

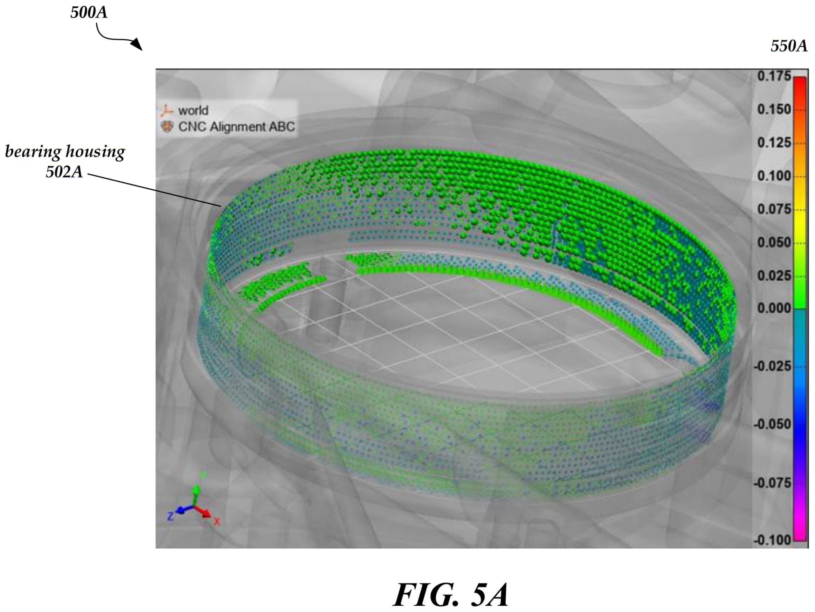

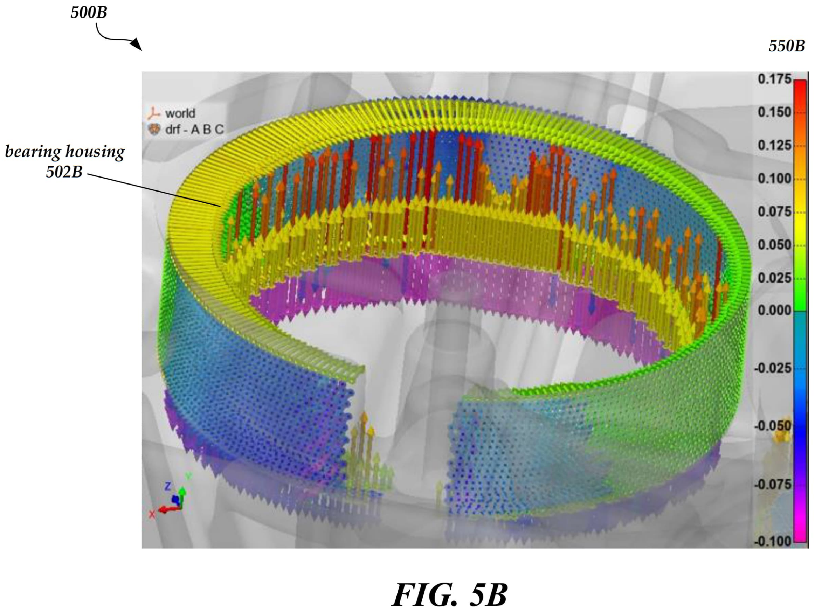

FIGS. 5A and 5B contrast wear levels associated with components of drive units 500A and 500B with and without mechanisms to prevent bearing creep in accordance with some embodiments of the present disclosure. FIG. 5A illustrates reduced wear level associated with a bearing housing 502Aof a drive unit 500A that utilizes a retaining plunger (e.g., the retaining plunger 330) to engage a recess (e.g., the recess 202) for preventing bearing creep. The legend 550A in FIG. 5A represents wear levels associated with the drive unit 500A, with values closer to zero indicating less wear due to the utilization of the retaining plunger to engage the recess for preventing bearing creep.

FIG. 5B shows a drive unit 500B that includes a bearing housing 502B. The drive unit 500B does not utilize a mechanism to prevent bearing creep. As such, bearings used by the drive unit 500B are more prone to rotation within the bearing housing 502B, leading to increased wear in the bearing housing 502B. The absence of mechanisms and/or components (e.g., the bearing assembly 300) to prevent bearing creep results in misalignment and friction of components of the drive unit 500B, which can compromise the stability and efficiency of the drive unit 500B over time. Compared with the drive unit 500A, the drive unit 500B shows increased wear levels as illustrated by the legend 550B of FIG. 5B with more values farther away from zero.

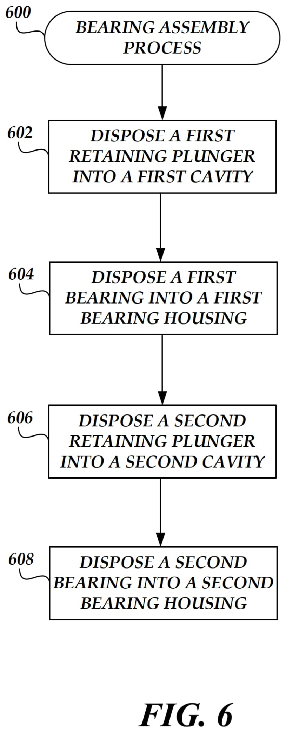

FIG. 6 illustrates an example bearing assembly process 600 (or simply referred to herein as a process) in accordance with embodiments of the present disclosure. The process 600 can be performed to assembly the bearing assembly 300 of FIG. 3C and/or the bearing 114, the bearing 224, and gear shaft 230 of FIG. 2C to the gearbox 100 for preventing any significant bearing creep during operation of the gearbox 100. The blocks of the process 600 illustrate example implementations, and in various other implementations various blocks may be rearranged, optional, and/or omitted, and/or additional block may be added.

The process 600 begins at block 602. At block 602, a first retaining plunger can be disposed into a first cavity. The first cavity can be structurally formed by a first bearing housing of a first case. For example, a retaining plunger can be disposed into a cavity structurally formed by a bearing housing of the bottom case 104.

At block 604, a first bearing (e.g., a lower bearing) is disposed into the first bearing housing. For example, the bearing 114 can be disposed or attached to a bearing housing of the bottom case 104. The bearing 114 can include at least a bearing outer ring, a bearing inner ring, and a plurality of rolling elements. More specifically, the bearing outer ring of the bearing 114 can be disposed or fit into the bearing housing of the bottom case 104. The bearing outer ring can include a recess on a surface of the bearing outer ring, where the surface can face downward toward the bearing housing of the bottom case 104. The bearing housing of the bottom case 104 can structurally form a cavity. A biased retaining plunger (e.g., the retaining plunger 330) that includes, for example, a spring, can be at least partially enclosed by the cavity.

At block 606, a second retaining plunger can be disposed into a second cavity. The second cavity can be structurally formed by a second bearing housing of a second case. For example, a retaining plunger can be disposed into a cavity structurally formed by a bearing housing of the top case 102.

At block 608, a second bearing (e.g., an upper bearing) is disposed into the second bearing housing. For example, the bearing 224 can be disposed or attached to a bearing housing of the top case 102. The bearing 224 can include at least a bearing outer ring, a bearing inner ring, and a plurality of rolling elements. More specifically, the bearing outer ring of the bearing 224 can be disposed or fit into the bearing housing of the top case 102. The bearing outer ring can include a recess on a surface of the bearing outer ring, where the surface can face upward toward the bearing housing of the top case 102. The bearing housing of the top case 102 can structurally form a cavity. A biased retaining plunger (e.g., the retaining plunger 330) that includes, for example, a spring, can be at least partially enclosed by the cavity.

Advantageously, the recess(es) of the bearing outer ring(s) does not need to be precisely aligned with the retaining plunger when performing the process 600. Because precise alignment between the recess and the retaining plunger is not necessary, the assembly process 600 can be performed faster and easier. When the recess does not align with the retaining plunger, the retaining plunger (e.g., the spring) is compressed into the cavity of the bearing housing.

If the bearing outer ring of the lower bearing and/or the bearing outer ring of the upper bearing begins to creep during operation, the bearing outer ring may slowly rotate until the recess aligns with the retaining plunger, causing the retaining plunger to be pushed (e.g., by a spring) into the recess to engage the recess and thereby preventing further rotation of the bearing outer ring.

In some embodiments, the process 600 can optionally include clocking, circumferential alignment, and/or radial distance adjustment associated with the bearing assembly 300. For example, clocking (e.g., rotational positioning of the bearing outer ring 212 relative to the bearing housing 302) can be applied for ensuring that the recess 202 on the bearing outer ring 212 align with the retaining plunger 330. As another example, circumferential alignment (e.g., angular positioning of components associated with a bearing assembly 300 around the circumference of the bearing outer ring 212) can be applied to allow a retaining plunger 330 to effectively engage the recess 202 during operation to prevent bearing creep. As another example, radial distance (e.g., spacing between the center of the bearing 114 and the bearing outer ring 212) may be designed to enable the retaining plunger 330 to be compressed into the cavity 340 when the retaining plunger 330 misaligned with the recess 202, and to engage the recess 202 when the retaining plunger 330 aligned with the recess 202. Advantageously, integrating steps such as clocking, circumferential alignment, and/or radial distance adjustment may help achieve proper functioning of the bearing assembly 300, allowing for smooth rotational movement while preventing unwanted rotation of the bearing outer ring 212 within the bearing housing 302.

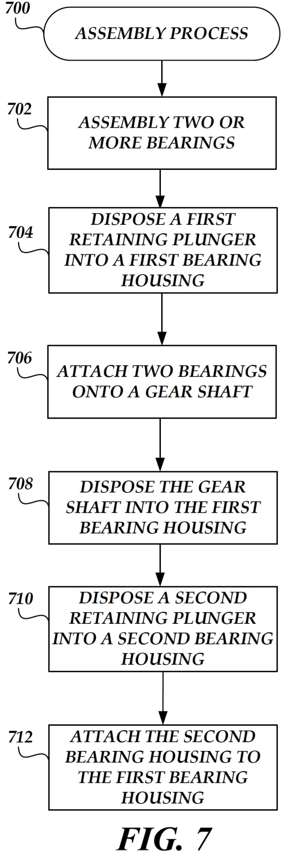

FIG. 7 illustrates an example assembly process 700 (or simply referred to herein as a process) in accordance with embodiments of the present disclosure. The process 700 can be performed to assembly at least some parts of the gearbox 100 that includes the top case 102 and the bottom case 104 (e.g., installing the bearing assembly 300 of FIG. 3C and/or the bearing 114, the bearing 224, and gear shaft 230 of FIG. 2C to the gearbox 100 for preventing any significant bearing creep during operation of the gearbox 100). The blocks of the process 700 illustrate example implementations, and in various other implementations various blocks may be rearranged, optional, and/or omitted, and/or additional block may be added.

The process 700 begins at block 702. At block 702, two or more bearings are assembled. More specifically, components of two or more bearings, such as bearing outer rings, bearing inner rings, and rolling elements, can be assembled together to form two or more bearings. For example, two bearings 114 and 224 can each be assembled (e.g., assembling the bearing outer ring 212, the bearing inner ring 214, and the rolling elements 216 together to form the bearing 114).

At block 704, a first retaining plunger (e.g., the retaining plunger 330) can be disposed or installed into a first bearing housing (e.g., the bearing housing 302). More specifically, the first retaining plunger can include a spring mechanism, and can be disposed within a first cavity (e.g., the cavity 340) structurally formed by the first bearing housing. The first bearing housing may be structurally formed by the top case 102.

At block 706, two bearings can be attached or installed onto a gear shaft. For example, the bearing 114 and the bearing 224 are attached to the gear shaft 230. The bearings 114 and 224, each of which includes a bearing outer ring, a bearing inner ring, and rolling elements, are disposed along the gear shaft 230 to facilitate smooth rotational movement and reduce friction associated with the gear shaft 230.

At block 708, the great shaft along with the two bearings attached onto the gear shaft are disposed into the first bearing housing. For example, the bearing 114 and the bearing 224 that are attached to the gear shaft 230 as shown in FIG. 2C can be disposed into the first bearing housing. The first bearing housing can provide structural support and alignment for the gear shaft 230 and the bearings 114 and 224, thereby ensuring that these components remain in desired positions during operation.

At block 710, a second retaining plunger is disposed into a second bearing housing. More specifically, the second retaining plunger can be disposed within a second cavity structurally formed by the second bearing housing. The second bearing housing may be structurally formed by the bottom case 104.

At block 712, the second bearing housing is installed or attached to the first bearing housing. For example, the second bearing housing can be installed or attached onto the first housing, gear shaft, and/or the two bearings. The second bearing housing can interface with the first housing to form at least parts of a complete enclosure for a gearbox (e.g., the gearbox 100).

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed display assemblies.

It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural. Further, various embodiments disclosed herein are to be taken in the illustrative and explanatory sense, and should in no way be construed as limiting of the present disclosure.

All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other. Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

The illustrative algorithms described in connection with the embodiments disclosed herein can be implemented as electronic hardware (e.g., ASICs or FPGA devices), computer software that runs on computer hardware, or combinations of both. Moreover, the various illustrative logical blocks and modules described in connection with the embodiments disclosed herein can be implemented or performed by a machine, such as a processor device, a digital signal processor ("DSP"), an application specific integrated circuit ("ASIC"), a field programmable gate array ("FPGA") or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the rendering techniques described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

It will also be appreciated that one or more of the elements depicted in the drawings/figures can also be implemented in a more separated or integrated manner, or even removed or rendered as inoperable in certain cases, as is useful in accordance with a particular application.

## Claims

1. A bearing assembly for power transmission, the bearing assembly comprising:
a bearing outer ring comprising a first surface and a second surface, the bearing outer ring structurally forming at least a first recess on the first surface;
a bearing housing configured to house the bearing outer ring, the bearing housing structurally forming at least a cavity; and
a retaining plunger comprising a spring, the retaining plunger at least partially enclosed by the cavity,
wherein, when the first recess and the retaining plunger are misaligned with each other, the retaining plunger is compressed by the first surface of the bearing outer ring into the cavity.

2. The bearing assembly of claim 1, wherein, when the first recess and the retaining plunger are aligned with each other, the retaining plunger engages the first recess to prevent the bearing outer ring to rotate relative to the bearing housing, in particular wherein the spring causes the retaining plunger to engage the first recess when the first recess and the retaining plunger are aligned with each other.

3. The bearing assembly of claim 1 or 2, wherein the bearing outer ring structurally forms a second recess on the second surface, and wherein the second surface and the first surface face toward opposite directions.

4. The bearing assembly of any one of the preceding claims, further comprising a bearing inner ring and a plurality of rolling elements, wherein the plurality of rolling elements are sandwiched between the bearing outer ring and the bearing inner ring, in particular wherein the plurality of rolling elements comprise balls, spheres, cylindrical rollers, tapered rollers, barrel roller, or needle rollers.

5. The bearing assembly of any one of the preceding claims, wherein the bearing housing is a portion of a top gear box or a bottom gear box.

6. The bearing assembly of any one of the preceding claims, wherein the first recess comprises a notch, a slot, a through slot, or a hole.

7. The bearing assembly of any one of the preceding claims, wherein the retaining plunger comprises a spring-loaded dowel pin, a detent pin, or a plunger pin.

8. A drive unit for a vehicle, the drive unit comprising:
a motor configured to drive a gearbox; and
the gearbox comprising:
a bearing comprising a bearing outer ring, the bearing outer ring structurally forming a first recess on a first surface,
a bearing housing configured to house the bearing, the bearing housing structurally forming at least a cavity, and
a retaining plunger at least partially enclosed by the cavity,
wherein the retaining plunger is compressed by the first surface of the bearing outer ring into the cavity when the first recess and the retaining plunger are misaligned with each other.

9. The drive unit of claim 8, wherein:
when the first recess and the retaining plunger are aligned with each other, the retaining plunger engages the first recess to prevent the bearing outer ring to rotate relative to the bearing housing; and/or
the retaining plunger comprises a spring, and wherein the spring causes the retaining plunger to engage the first recess when the first recess and the retaining plunger are aligned with each other.

10. The drive unit of claim 8 or 9, wherein the bearing outer ring structurally forms a second recess on a second surface, and wherein the second surface and the first surface face toward opposite directions.

11. The drive unit of any one of claims 8 to 10, wherein the bearing comprises a bearing inner ring and a plurality of rolling elements, and wherein the plurality of rolling elements are sandwiched between the bearing outer ring and the bearing inner ring.

12. The drive unit of any one of claims 8 to 11, wherein:
the first recess comprises a notch, a slot, a through slot, or a hole; and/or
the gearbox comprises a bearing assembly of any one of claims 1 to 7 comprising said bearing outer ring, said bearing housing and said retaining plunger.

13. A process of assembling a bearing assembly for power transmission, the process comprising:
disposing a first retaining plunger into a first cavity, the first cavity structurally formed by a first bearing housing of a first case;
disposing a first bearing into the first bearing housing, the first bearing comprising a first bearing outer ring structurally forming a first recess that is configured to engage the first retaining plunger when aligned with the first retaining plunger;
disposing a second retaining plunger into a second cavity, the second cavity structurally formed by a second bearing housing of a second case; and
disposing a second bearing into the second bearing housing, the second bearing comprising a second bearing outer ring structurally forming a second recess that is configured to engage the second retaining plunger when aligned with the second retaining plunger.

14. The process of claim 13, wherein the first case is a top gear case of a gearbox and the second case is a bottom gear case of the gearbox, in particular wherein the first bearing and the second bearing are disposed along a gear shaft that is at least partially enclosed within the top gear case and the bottom gear case.

15. The process of claim 13 or 14, wherein:
the first retaining plunger comprises a spring, and wherein the first retaining plunger is compressed fully into the first cavity by the first bearing when the first recess and the first retaining plunger are misaligned with each other; and/or
when the first retaining plunger engages the first recess, the first bearing outer ring is prevented from rotating relative to the first bearing housing.
